# EUROPÄISCHE PATENTSCHRIFT

(11) **EP 0 525 478 B1**
(45) Veröffentlichungstag und Bekanntmachung des Hinweises auf die Patenterteilung: **11.06.1997**
(21) Anmeldenummer: 92111775.0
(22) Anmeldetag: 10.07.1992
(51) Int. Cl.: G02F 1/1337

(54) **Flüssigkristallanzeigezelle**
Liquid crystal display cell
Cellule d'affichage à cristal liquide

(30) Priorität: 26.07.1991 CH 2246/91; 14.01.1992 CH 100/92
(43) Veröffentlichungstag der Anmeldung: 03.02.1993
(73) Patentinhaber: F. HOFFMANN-LA ROCHE AG, 4002 Basel (CH); NIOPIC MOSCOW RESEARCH AND PRODUCTION ASSOCIATION, Moskau 103787 (SU)
(72) Erfinder: Chigrinov, Vladimir Grigorievich, 123481 Moscow, Russia (RU); Kozenkov, Vladimir Marcovich, 141700 Dolgoprudniy, Moscow region (RU); Novoseletsky, Nicolic Vasilievich, 141704 Dolgoprudniy, Moscow region (RU); Reshetnyak, Victor Yurievich, 252000, Kiev, Ukrainia (UK); Reznikov, Yuriy Alexandrovich, 252054 Kiev, Ukrainia (UK); Schadt, Martin, CH-4411 Seltisberg (CH); Schmitt, Klaus, W-7850 Lörrach (DE)
(74) Vertreter: Buntz, Gerhard

(56) Entgegenhaltungen:
- EP-A- 0 387 059
- EP-A- 0 445 629
- PATENT ABSTRACTS OF JAPAN vol. 14, no. 98 (P-1011) 22. Februar 1990 & JP-A-13 03 412
- NIKKEI HIGH TECH REPORT Bd. IV, Nr. 5, 9. Januar 1989, Tokyo, JP, SS 7-8, XP35829; M. OKAZAKI: 'Exotic Combination of Materials Yields Viable Liquid-Crystal Recording Medium'
- PATENT ABSTRACTS OF JAPAN vol. 10, no. 72 (P-438)(2129) 22. März 1986 & JP-A-60 211 427
- PATENT ABSTRACTS OF JAPAN vol. 12, no. 114 (P-688)(2961) 12. April 1988 & JP-A-62 245 218
- PATENT ABSTRACTS OF JAPAN vol. 12, no. 235 (P-725)(3082) 6. Juli 1988 & JP-A-63 027 815

## Beschreibung

Die Erfindung betrifft Flüssigkristallanzeigezellen aus einem orientierten Flüssigkristall zwischen zwei Platten (Substraten) mit transparenten Elektrodenschichten und Orientierungsschichten, welche die angrenzenden Flüssigkristallmoleküle in eine Vorzugsrichtung ausrichten.

In Flüssigkristallanzeigezellen, die auf einem elektrischen Feldeffekt beruhen, sind die den Flüssigkristall begrenzenden Glas- oder Kunstoffplatten auf den dem Flüssigkristall zugewandten Oberflächen mit Beschichtungen versehen, welche die unmittelbar angrenzenden Flüssigkristallmoleküle entlang einer Vorzugsrichtung orientieren. Dies gilt z.B. für Flüssigkristallanzeigen, die auf dem sog. Drehzellen (twisted nematic, TN)-Effekt, und solche, die auf höherer Verdrillung beruhen, z.B. sog. Super Twisted Nematic (STN)-Zellen, sowie schliesslich auch für ferroelektrische Flüssigkristallzellen und andere auf einem Feldeffekt beruhenden Flüssigkristallzellen.

Bisher wurde die Wandorientierung der Flüssigkristallmoleküle in Anzeigezellen entweder durch Schrägbedampfen der Substratoberfläche mit SiOₓ, oder aber heute praktisch ausschliesslich durch mechanische Behandlung (Reiben) einer Polymerschicht erzeugt, die zuvor auf die Substratoberfläche(n) aufgebracht wurde. Diese Reibmethode erlaubt es nicht, selektive Gebiete der Substratoberfläche mit einer Vorzugsorientierung zu versehen. Insbesondere ist es mit bisherigen Methoden nicht möglich, Orientierungsmuster herzustellen, wie z.B. eine von Bildpunkt (Pixel) zu Bildpunkt verschiedene Wandorientierung. Ausserdem beeinträchtigt das heute beinahe ausschliesslich angewendete Reiben einer Polymerschicht häufig die Ausbeuten bei der Herstellung von aktiv adressierten Drehzellen dadurch, dass die beim Reiben entstehende elektrostatische Aufladung des Substrates zu elektrischen Durchbrüchen in den Dünnfilmtransistoren auf der Substratoberfläche führt.

Aus JP-A-1-303 412 ist eine Flüssigkristallanzeige mit polymeren Orientierungsschichten bekannt, in denen mittels schrägem Lichteinfall eine schräggestellte Mikrostruktur im Polymer erzeugt wird. Dadurch wird eine annähernd homöotrope (senkrechte) Orientierung der LC-Moleküle zur Substratoberfläche erreicht.

Aus DE-A-32 34 074 ist eine Flüssigkristallzelle bekannt, deren Orientierungsschichten bereichsweise unterschiedliche Orientierung, z.B. in Schachbrettform aufweisen. Dieses Orientierungsmuster wird z.B. mit einem mikrolithographischen Verfahren oder durch Prägung erzeugt.

Aus EP-A-249 311 ist ein wellenleitendes Flüssigkristall-Bauelement bekannt, mit einem wellenleitenden Bereich, der sich durch unterschiedliche Orientierung vom übrigen Bereich abgrenzt. Die unterschiedliche Orientierung in den Bereichen wird durch entsprechende Oberflächenschichten erzeugt und zwar durch Behandlung mit oberflächenaktiven Mitteln, durch Schrägbedampfung oder durch Reiben der dem Flüssigkristall zugewandten Oberflächen der Begrenzungsplatten.

Alle diese bekannten Orientierungsmassnahmen bedingen verhältnismässig aufwendige Herstellungsschritte und führen dennoch nicht zu optimalen Ergebnissen. Ausserdem sind bestimmte Formen der Orientierung mit den bekannten Methoden überhaupt nicht erreichbar.

Der Erfindung liegt die Aufgabe zugrunde, eine neue und verbesserte Möglichkeit der Oberflächenorientierung von Flüssigkristallen anzugeben, die die Nachteile der bekannten Methoden vermeidet und vor allem die Möglichkeit der Herstellung von Orientierungsmustern beinhaltet.

Erfindungsgemäss wird dies dadurch erreicht, daß mindestens eine der Orientierungsschichten aus einem orientierten Photopolymer besteht, das durch Bestrahlung mit linear polarisiertem Licht polymerisiert wurde.

Für den Zweck der vorliegenden Beschreibung wird ein Polymer, dessen Polymerisation durch Lichteinwirkung ausgelöst oder bewirkt wurde als Photopolymer bezeichnet. Im übrigen wird auch Bezug genommen auf das schweizerische Patentgesuch Nr. 2244/91 mit dem Titel "Orientierte Photopolymere und Verfahren zu ihrer Herstellung", die der EP-A-525 477 entspricht.

Besonders bevorzugt wird ein nematischer oder ferroelektrischer Flüssigkristall durch die Orientierungsschichten planar in eine Vorzugsrichtung orientiert, wobei der Direktor mit der Substratoberfläche einen von Null verschiedenen Winkel θ einschliesst.

Gemäss einer bevorzugten Ausführungsform der Erfindung ist ein Muster aus Bereichen mit unterschiedlichen Vorzugsorientierungen oder ein Muster aus Bereichen mit Vorzugsorientierung und unorientierten Bereichen vorhanden.

Gemäss einer weiteren bevorzugten Ausführungsform weisen die beiden Platten unterschiedliche Orientierungsmuster auf, die sich durch unterschiedliche Vorzugsorientierungen unterscheiden, was zu unterschiedlichen Verdrillungswinkeln führt.

Es wurde überraschend gefunden, dass orientierte Photopolymerschichten, d.h. Photopolymere die durch Einstrahlen von linear polarisiertem Licht polymerisiert sind, Flüssigkristalle, die mit ihnen in Kontakt kommen, in eine Vorzugsrichtung orientieren. Dies gilt nicht nur für die Vorzugsrichtung parallel zu den Platten. Durch die orientierten Photopolymere kann auch ein Kippwinkel in Richtung senkrecht zu den Platten induziert, werden.

Dadurch wird die Herstellung von Oberflächenorientierungsschichten in Flüssigkristallanzeigezellen ohne SiOₓ- Bedampfung und ohne geriebene Polymere erstmals möglich.

Die Verwendung von Orientierungsschichten aus Photopolymeren erlaubt erstmals auch die Erzeugung von Orientierungsmustern, indem photographische Masken mit linear polarisiertem Licht einer gewünschten Schwingungsrichtung bestrahlt und auf das beschichtete Substrat abgebildet werden. Als Alternative können auch interferometrische Abbildungstechniken angewandt werden (polarisierte Hologramme).

Im folgenden werden anhand der beiliegenden Zeichnung und der Beispiele Ausführungsformen der Erfindung näher erläutert. Es zeigen
Fig. 1 eine Flüssigkristallanzeigezelle nach der Erfindung
Fig. 2 eine Vorrichtung zur Herstellung einer Orientierungsschicht
Fig. 3 einen Maskensatz zur Verwendung in der Vorrichtung nach Fig. 1
Fig. 4-5 verschiedene Orientierungsmuster als Ergebnis der Belichtung mit dem Maskensatz gemäss Fig. 3.

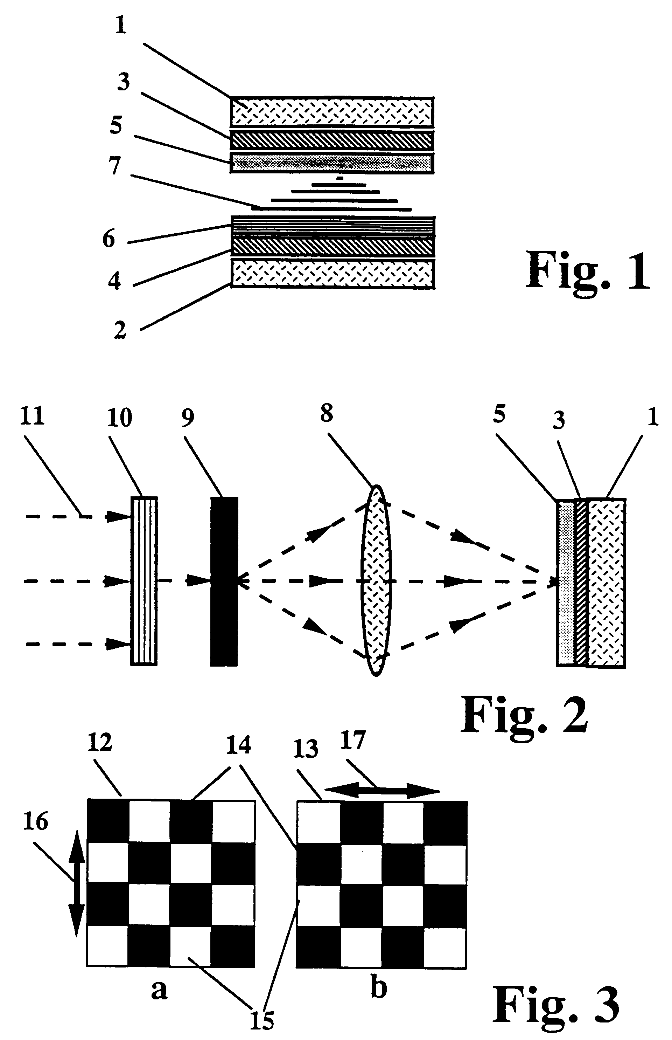

Die in Fig. 1 schematisch im Schnitt gezeigte Flüssigkristallzelle besteht wie üblich aus zwei transparenten Platten 1, 2 und einer dazwischenliegenden Flüssigkristallschicht 7. Die beiden Platten aus Glas oder Kunststoff sind mit Ansteuerelektroden 3, 4 und mit darüberliegenden Orientierungsschichten 5, 6 versehen. Im Unterschied zu vorbekannten Flüssigkristallzellen bestehen die Orientierungsschichten aus orientiertem Photopolymer.

In der in Fig. 2 gezeigten einfachen Vorrichtung zur Herstellung der orientierten Photopolymerschichten ist eine Glasplatte 1 mit einer transparenten, leitenden Elektrodenschicht 2 und mit einer Schicht 3 aus einem photopolymerisierbaren organischen Material versehen. Die Schicht wird mittels einer Linse 4 und einer vorgesetzten Maske 5 mit linear polarisiertem Licht bestrahlt. Dieses kommt von einem Polarisator 6, der mit unpolarisiertem UV-Licht 7 beleuchtet wird.

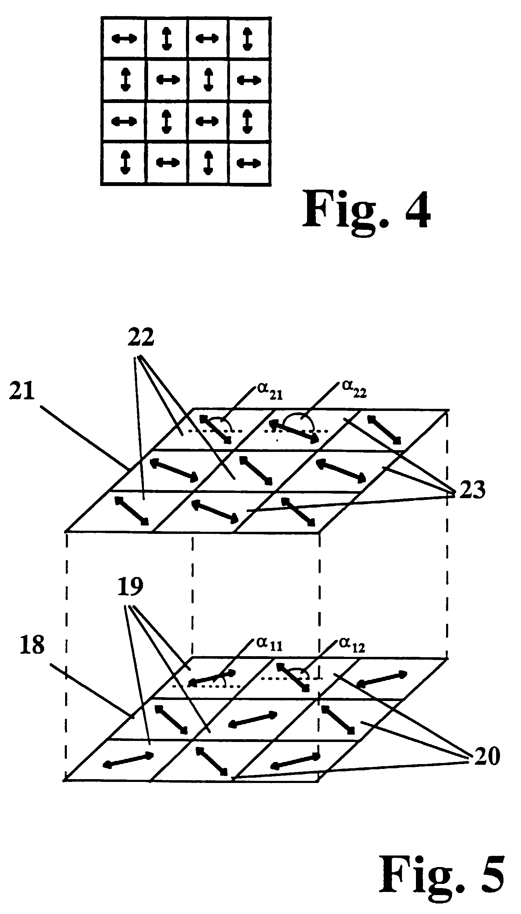

Die Maske 5 ist in Fig. 3 als Maskensatz gezeigt, der aus zwei komplementären Masken 8, 9 oder mit anderen Worten aus einer positiven Maske 8 (Fig. 3a) und einer negativen Maske 9 (Fig. 3b) besteht. Die beiden Masken zeigen ein schachbrettartiges Muster, d.h. sie decken abwechselnd gleich grosse Quadrate 10 der gesamten Zellenfläche ab und lassen die jeweils anderen quadratischen Flächen 11 frei.

Bestrahlung durch die positive Maske 8 mit linear polarisiertem Licht mit der durch den Pfeil 12 angegebenen Polarisationsrichtung bewirkt die orientierte Polymerisation der von der Maske frei gelassenen Flächen der dahinter angeordneten polymerisierbaren Schicht 2. Nach diesem ersten Schritt wird die Maske 8 durch die negative Maske 9 ersetzt und die polymerisierbare Schicht 3 mit Licht bestrahlt, dessen Polarisationsrichtung gemäss dem Pfeil 12 um 90° gedreht ist. Die nunmehr freien Flächen der Schicht polymerisieren mit entsprechend gedrehter Orientierung.

Wenn im ersten Schritt vollständige Polymerisation erreicht wurde, ist für den zweiten Schritt keine Maske mehr erforderlich, weil die im ersten Schritt induzierte Orientierung erhalten bleibt.

Durch diese zweistufige Bestrahlung mit verschiedenen Masken und unterschiedlich linear polarisiertem Licht entsteht ein Orientierungsmuster in der Photopolymerschicht, wie es in Fig. 4 gezeigt ist. Die jeweils aneinandergrenzenden quadratischen Bereiche weisen gegeneinander versetzte Vorzugsorientierung der Polymermoleküle auf. In einer Flüssigkristallzelle, die mit derart beschichteten Platten aufgebaut ist, orientieren sich die Flüssigkristallmoleküle entsprechend den wechselnden Orientierungen der Photopolymerschicht.

Anstelle der von Bereich zu Bereich um 90° versetzten Orientierung sind auch andere Winkelkombinationen möglich. Vor allem ist es möglich, die Orientierungsrichtungen voneinander in der Zelle gegenüberliegenden Bereichen so vorzusehen, dass die Verdrillungswinkel bzw. die Ganghöhen der dazwischenliegenden Volumenbereiche des Flüssigkristalls von Bereich zu Bereich variieren. Durch geeignete chirale Dotierung des nematischen Flüssigkristalls lassen sich so in einer einzigen Anzeige TN-Bereiche und STN-Bereiche nebeneinander verwirklichen. Dies kann von Bedeutung sein, wenn in einer Anzeige sowohl grossflächige Informationen als auch komplexe, d.h. Multiplexansteuerung erfordernde Informationen dargestellt werden sollen. Auch lassen sich verschieden stark verdrillte STN-Zellen in ein und derselben Anzeige realisieren.

Ein Beispiel einer solchen Anzeige, bei der Bildpunkte mit einem ersten Helixwinkel ϕ₁ mit Bildpunkten mit einem zweiten Helixwinkel ϕ₂ des jeweils dazwischenliegenden Flüssigkristalls rasterförmig angeordnet sind, ist in Fig. 5 gezeigt. Dargestellt sind die beiden Platten mit den Vorzugsorientierungen.

Die untere Platte 14 hat in einerersten Menge 15 der rasterförmig angeordneten Flächenbereiche eine Vorzugsorientierung α₁₁, in der zweiten Menge 16 die Vorzugsorientierung α₁₂, wobei α der Winkel der Vorzugsorientieurng gegenüber einer Substratkante ist.

Die obere Platte 17 hat entsprechend eine erste Menge 18 von Flächenbereichen mit Vorzugsorientierung α₂₁ und eine zweite Menge 19 von Flächenbereichen mit Vorzugsorientierung α₂₂. Durch geeignete Justierung der Platten in einer Flüssigkristallzelle ergeben sich für den dazwischenliegenden Flüssigkristall die Helixwinkel φ₁ = α₁₁ - α₁₂ bzw. ϕ₂ = α₂₁ - α₂₂. Durch Dotierung mit cholesterischen Zusätzen, die in an sich bekannter Weise eine geeignete natürliche Verdrillung bewirken, können stabile Helixkonfigurationen mit einheitlichem Drehsinn und 70° ≤ | ϕ₁ - ϕ₂| ≤ 220° erreicht werden.

Im folgenden werden einige zur Erläuterung der Erfindung durchgeführte Beispiele beschrieben.

### Beispiel 1

Eine Glasplatte wurde mit einer 2%igen Lösung von Polyvinylcinnamat (Mol. Gew. ∼ 15000) in Methylcellosolveacetat in einem Spin-Coating Verfahren mit 3000 Upm ca. 30 s beschichtet. Die Dicke der so hergestellten Schichtbetrug ca. 0.1µ. Danach wurde die Schicht ca. 20 min. an der Luft getrocknet und anschliessend während ca. 20 s auf ca. 80°-90°C erhitzt. Nach dieser Vorbehandlung wurde die Schicht während ca. 100 s der Bestrahlung mit dem linear polarisierten Licht einer HgHP-Lampe mit einer Wellenlänge λ von ca. 365 nm ausgesetzt, und zwar zuerst durch die positive Maske 8 und danach mit um 90° gedrehter Polarisationsrichtung durch die komplementäre oder negative Maske 9. Die Bestrahlungsenergie betrug jeweils ca. 15 mW/cm².

Aus den so vorbereiteten Platten wurde in an sich bekannter Weise eine Zelle gebaut, die mit einem nematischen Flüssigkristall gefüllt wurde. Je nachdem ob eine oder beide Platten ein Orientierungsmuster aufweisen, muss gegebenenfalls auf genaue Justierung geachtet werden. Es wurde festgestellt, dass die Flüssigkristallschicht in zwei Vorzugsrichtungen planar orientiert war und zwar so, dass der nematische Direktor der Flüssigkristallschicht entsprechend der wechselnden Orientierung in den Photopolymerschichten ausgerichtet war.

### Beispiel 2

In einem ähnlichen Vorgehen wie in Beispiel 1 wurde eine Schicht aus einer Lösung eines Polyvinylesters der Paramethoxyzimtsäure (Molekulargewicht ca. 15000-50000) in Chlorobenzol und Dichloräthylen 1:1 während ca. 10 s einer Bestrahlungsleistung von ca. 0.5 J/cm² ausgesetzt. Die entstehende Schicht induziert ebenfalls eine parallele Orientierung in einem angrenzenden Flüssigkristall.

### Beispiel 3

Beispiel 1 wurde wiederholt, jedoch an Stelle von linear polarisiertem Licht wurde im zweiten Belichtungsschritt unpolarisiertes Licht verwendet. Nach dem Zusammenbau der Flüssigkristallzelle wurde festgestellt, dass die mit linear polarisiertem Licht photopolymerisierten Gebiete die Flüssigkristallschicht in eine Vorzugsrichtung planar orientierten, wogegen der Flüssigkristall in den mit unpolarisiertem Licht bestrahlten Gebieten keine Vorzugsrichtung aufweist.

## Patentansprüche

1. Flüssigkristallanzeigezelle, die aus zwei Platten (1,2) und einer dazwischenliegenden, orientierten Flüssigkristallschicht (7) besteht, wobei die Innenseiten der zwei Platten (1,2) mit transparenten Elektroden (3,4) und darüberliegenden Orientierungsschichten (5,6), welche die angrenzenden Flüssigkristallmoleküle in eine Vorzugsrichtung ausrichten, versechen sind, dadurch gekennzeichnet, dass mindestens eine der Orientierungsschichten (5,6) aus einem orientierten Photopolymer besteht, das durch Bestrahlung mit linear polarisiertem Licht polymerisiert wurde.

2. Flüssigkristallanzeigezelle nach Anspruch 1, dadurch gekennzeichnet, dass die Vorzugsrichtungen an den beiden Platten (1,2) verschieden sind.

3. Flüssigkristallanzeigezelle nach Anspruch 1, dadurch gekennzeichnet, dass ein nematischer oder ferroelektrischer Flüssigkristall durch die Orientierungsschichten planar in eine Vorzugsrichtung orientiert wird, wobei der Direktor mit der Substratoberfläche einen von Null verschiedenen Winkel θ einschliesst.

4. Flüssigkristallanzeigezelle nach Anspruch 1, dadurch gekennzeichnet, dass ein Muster aus Bereichen mit unterschiedlichen Vorzugsrichtungen vorhanden ist.

5. Flüssigkristallanzeigezelle nach Anspruch 1, dadurch gekennzeichnet, dass ein Muster aus Bereichen mit Vorzugsrichtung und unorientierten Bereichen vorhanden ist.

6. Flüssigkristallanzeigezelle nach Anspruch 3, dadurch gekennzeichnet, dass die beiden Platten unterschiedliche Orientierungsmuster aufweisen, die sich durch unterschiedliche Vorzugsrichtungen unterscheiden, was zu unterschiedlichen Verdrillungswinkeln führt.

## Claims

1. A liquid crystal display cell consisting of two plates (1, 2) with an intermediate oriented liquid-crystal layer (7), the insides of the two plates (1, 2) being provided with transparent electrodes (3, 4) and orientation layers (5, 6) thereabove, which orientate the adjacent liquid crystal molecules into a preferential direction, characterised in that at least one of the orientation layers (5, 6) consists of an oriented photopolymer, which has been polymerised by irradiation with linear-polarised light.

2. A liquid crystal display cell according to claim 1, characterised in that the preferential directions are different in the two plates (1, 2).

3. A liquid crystal display cell according to claim 1, characterised in that a nematic or ferroelectric liquid crystal is planar-oriented into a preferential direction by the orientation layers, the director including with the substrate surface an angle θ differing from zero.

4. A liquid crystal display cell according to claim 1, characterised in that a pattern is present which consists of zones having different preferential directions.

5. A liquid crystal display cell according to claim 1, characterised in that a pattern is present which consists of zones having a preferential direction and non-oriented zones.

6. A liquid crystal display cell according to claim 3, characterised in that the two plates have different orientation patterns which differ in respect of different preferential directions, resulting in different twist angles.

## Revendications

1. Cellule d'affichage à cristaux liquides, constituée de deux plaques (1, 2) et d'une couche de cristaux liquides orientée (7) intermédiaire, les faces internes des deux plaques (1, 2) étant munies d'électrodes transparentes (3, 4) et de couches d'orientation (5, 6) placées au-dessus, orientant les molécules de cristaux liquides adjacentes dans une direction préférentielle, caractérisée en ce que au moins l'une des couches d'orientation (5, 6) est constituée d'un photopolymère orienté, ayant été polymérise par irradiation avec de la lumière polarisée rectilignement.

2. Cellule d'affichage à cristaux liquides selon la revendication 1, caractérisée en ce que les directions préférentielles, sont différentes sur les deux plaques (1, 2).

3. Cellule d'affichage à cristaux liquides selon la revendication 1, caractérisée en ce qu'un cristal liquide nématique ou ferroélectrique est orienté, de façon plane, dans une direction préférentielle par les couches d'orientation, le directeur nématique avec la surface du substrat comprenant un angle θ différent de zéro.

4. Cellule d'affichage à cristaux liquides selon la revendication 1, caractérisée en ce qu'elle comporte un modèle constitué de régions présentant des directions préférentelles différentes.

5. Cellule d'affichage à cristaux liquides selon la revendication 1, caractérisée en ce qu'elle comporte un modèle constitué de régions présentant une direction préférentielle et de régions non orientées.

6. Cellule d'affichage à cristaux liquides selon la revendication 3, caractérisée en ce que les deux plaques présentent des modèles d'orientation différents, se différenciant par des directions préférentielles différentes, ce qui conduit à des angles de torsion différents.
